# FASCICULE DE BREVET EUROPEEN

(11) **EP 3 572 915 B1**
(45) Date de publication et mention de la délivrance du brevet: **30.06.2021**
(21) Numéro de dépôt: 19173839.2
(22) Date de dépôt: 10.05.2019
(51) Int. Cl.: G06F 3/023

(54) **TECHNIQUE DE SAISIE D'AU MOINS UN CARACTÈRE AU MOYEN D'UNE INTERFACE UTILISATEUR D'UN DISPOSITIF ÉLECTRONIQUE**
TECHNIK ZUR ERFASSUNG MINDESTENS EINES ZEICHENS ÜBER EINE BENUTZERSCHNITTSTELLE EINER ELEKTRONISCHEN VORRICHTUNG
TECHNIQUE FOR ENTERING AT LEAST ONE CHARACTER BY MEANS OF A USER INTERFACE OF AN ELECTRONIC DEVICE

(30) Priorité: 22.05.2018 FR 1854257
(43) Date de publication de la demande: 27.11.2019
(73) Titulaire: ORANGE, 75015 Paris (FR)
(72) Inventeur: SACHET, Patrick, 92326 CHATILLON CEDEX (FR); WEENS, Franck, 92326 CHATILLON CEDEX (FR); LAVEDRINE, Remi, 92326 CHATILLON CEDEX (FR)

(56) Documents cités:
- FR-A1- 3 023 021
- US-A1- 2017 308 255

## Description

L'invention appartient au domaine des interfaces utilisateurs et concerne plus particulièrement un procédé de saisie d'au moins un caractère au moyen d'une interface utilisateur d'un dispositif électronique.

La miniaturisation des dispositifs électroniques et notamment des dispositifs de communication sans fil permet aujourd'hui le développement de nombreux objets dit « objets connectés ». Il s'agit souvent d'objets classiques auxquels sont ajoutées des capacités de communication. Il peut s'agir par exemple d'un capteur domotique (détecteur de température, de passage, de pression, ...), d'un pot de fleur capable d'informer l'utilisateur lorsqu'il est nécessaire de procéder à l'arrosage, d'un bracelet permettant de recevoir des messages ou encore d'une montre à partir de laquelle il est possible de prendre des appels téléphoniques. Alors qu'il est possible aujourd'hui de miniaturiser les circuits électroniques de tels objets, les moyens d'interaction avec les utilisateurs ne peuvent être miniaturisés de la même manière. Par exemple, un capteur domotique peut nécessiter des moyens d'interaction de façon à ce qu'un utilisateur puisse configurer une association avec un terminal en saisissant par exemple un code d'accès à un réseau sans fil. Pour cela, des moyens d'interaction présentant un minimum d'ergonomie sont nécessaires, comme par exemple un écran accompagné d'un dispositif de saisie. Du fait de la petite taille de certains équipements, l'encombrement de ces moyens d'interaction doit parfois être réduit au minimum. Par exemple, un capteur domotique peut comporter un écran de taille adaptée capable d'afficher quelques caractères et un unique bouton permettant la saisie d'informations.

La publication brevet WO2015/197936 (correspondant à la publication brevet FR3023021A1) décrit une technique de saisie d'au moins un caractère alphanumérique sur un dispositif électronique au moyen d'une interface utilisateur d'un dispositif électronique. Cette interface utilisateur comprend un écran d'affichage avec au moins une première zone d'affichage d'au moins un caractère alphanumérique saisi, et une deuxième zone d'affichage d'un caractère alphanumérique en cours de saisie. Le dispositif électronique comprend également un élément d'entrée de commande pour entrer au moins une commande de défilement à appliquer à un caractère alphanumérique affiché dans la deuxième zone d'affichage. Le dispositif électronique détecte une entrée de commande de défilement effectuée au moyen de l'élément d'entrée de commande, cette commande déclenchant un affichage d'un caractère dans la deuxième zone d'affichage. Le dispositif électronique remplace alors le caractère précédemment affiché par un nouveau caractère. L'utilisateur peut alors commander une saisie du caractère courant ou bien commander un affichage d'un caractère suivant.

La publication brevet US2017/308255A1 décrit une interface utilisateur comprenant un champ de saisie de caractères et une bande de sélection de caractères fixe affichant dans un tableau à une dimension un sous-ensemble sélectionnable d'une pluralité de caractères à défilement circulaire. Sur détection d'une sélection d'un caractère dans le sous-ensemble, celui-ci est ajouté au champ de saisie de caractères. Suite à une détection d'une commande de défilement, le sous-ensemble affiché dans la bande de sélection est mis à jour afin de permettre une nouvelle sélection de caractères.

La saisie d'un message textuel composé de caractères peut sembler ainsi fastidieuse à l'utilisateur, ce dernier devant interagir avec le dispositif électronique pour faire défiler chaque caractère un par un jusqu'à ce que le caractère recherché apparaisse.

Il existe par conséquent un besoin d'une solution de saisie de caractères applicable à des dispositifs électroniques ayant des moyens d'interaction réduits au minimum qui soit de mise en œuvre simple, plus rapide et permettant par conséquent une augmentation de la durée d'utilisation d'une batterie du dispositif électronique.

Un des buts de l'invention est de remédier à des insuffisances/inconvénients de l'état de la technique et/ou d'y apporter des améliorations.

Selon un premier aspect, il est proposé un procédé selon la revendication 1, permettant la saisie d'au moins un caractère au moyen d'une interface utilisateur d'un dispositif électronique.

La technique proposée permet une saisie rapide et simple d'une suite de caractères au moyen d'un écran affichant les caractères saisis et les caractères en cours de saisie et d'un élément d'entrée de commande tel qu'un bouton poussoir, ou encore une zone prédéfinie d'un écran tactile.

Une telle technique facilite la saisie d'un message textuel pour un utilisateur. Au fur et à mesure des itérations, l'ensemble de caractères qui défile devient de plus en plus réduit, permettant ainsi à l'utilisateur de sélectionner le caractère souhaité.

De plus, une telle technique permet de réduire la consommation énergétique du dispositif électronique car le nombre d'interactions effectué sur l'élément d'entrée de commande est réduit. Ainsi, la technique proposée permet une plus grande autonomie d'utilisation du dispositif électronique.

Dans un mode de réalisation particulier, le procédé de saisie comprend en outre un affichage du caractère validé dans une deuxième zone d'affichage et une suppression du caractère validé de la première zone d'affichage.

Le dispositif électronique permet ainsi à l'utilisateur d'obtenir un suivi de ses actions de manière simple.

Dans un mode de réalisation particulier du procédé de saisie, la vitesse de défilement des caractères dans la première zone d'affichage lors d'une nouvelle itération est strictement inférieure à celle d'une itération précédente.

Ainsi, au fur et à mesure des itérations, la durée d'affichage d'un caractère en cours de défilement dans la première zone d'affichage augmente, permettant ainsi à l'utilisateur d'interagir plus efficacement avec le dispositif électronique.

Selon une caractéristique particulière du procédé de saisie, lors d'une itération, la durée du défilement de l'ensemble de caractères est constante.

Cette durée peut par exemple prendre la valeur de dix secondes.

Dans un mode de réalisation particulier du procédé de saisie, la commande déclenchant le défilement de caractères dans la première zone d'affichage est détectée suite à un appui court sur l'élément d'entrée de commande.

Dans un tel mode de réalisation, l'élément d'entrée de commande est par exemple un bouton poussoir ou une zone prédéterminée de l'interface d'affichage lorsque celle-ci consiste en un écran tactile.

L'interaction de l'utilisateur avec l'élément d'entrée de commande est ainsi très simple.

Dans un mode de réalisation particulier du procédé de saisie, sur détection d'un appui long sur l'élément d'entrée de commande, la vitesse de défilement des caractères dans la première zone d'affichage est augmentée.

La durée de l'interaction sur l'élément d'entrée de commande permettant d'accélérer la vitesse de défilement des caractères étant de durée plus longue que la durée de l'interaction pour déclencher le défilement des caractères, le dispositif électronique peut discriminer une demande d'accélération du défilement d'une autre interaction, telle qu'une commande de défilement. Par ailleurs, l'interaction de l'utilisateur avec l'élément d'entrée de commande reste très simple.

Selon un deuxième aspect, il est proposé un dispositif électronique selon la revendication 7, permettant une saisie d'au moins un caractère au moyen d'une interface utilisateur.

Un tel dispositif est par exemple un capteur domotique comprenant un écran et un bouton poussoir ou bien un écran tactile, permettant la saisie de caractères.

Les avantages énoncés pour le procédé de saisie d'au moins un caractère selon le premier aspect sont transposables directement au dispositif électronique.

Ce dispositif électronique peut bien entendu comporter en termes structurels les différentes caractéristiques relatives au procédé de saisie d'au moins un caractère tel que décrit précédemment, qui peuvent être combinées ou prises isolément.

Selon un troisième aspect, il est également proposé un programme pour un dispositif électronique, comprenant des instructions de code de programme destinées à commander l'exécution des étapes du procédé de saisie d'au moins un caractère selon le premier aspect mises en œuvre par le dispositif électronique, lorsque ce programme est exécuté par ce dispositif.

Selon un quatrième aspect, il est proposé un support d'enregistrement lisible par un dispositif électronique sur lequel est enregistré le programme selon le troisième aspect.

D'autres caractéristiques et avantages apparaîtront à la lecture de modes de réalisation décrits en référence aux dessins dans lesquels :
- la figure la représente un dispositif électronique dans un mode de réalisation particulier ;
- la figure 1b représente l'interface utilisateur du dispositif électronique lors de la saisie d'un message textuel au moyen d'un élément d'entrée de commande dans un mode de réalisation particulier ;
- la figure 2 représente des étapes d'un procédé de saisie d'un message textuel dans un mode de réalisation particulier ;
- la figure 3 représente le dispositif électronique dans un mode de réalisation particulier.

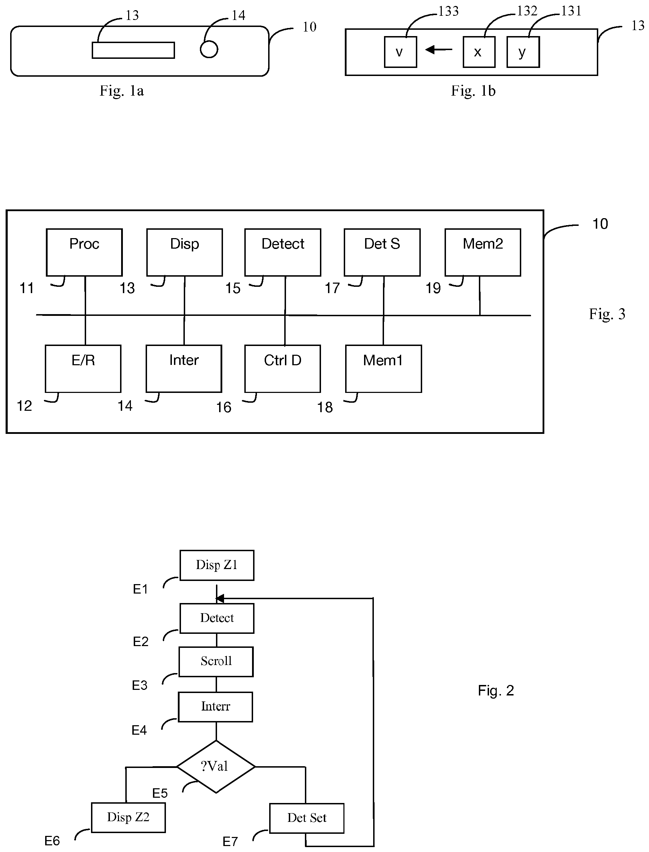

La **figure** 1**a** représente un dispositif électronique 10. Ce dispositif électronique est par exemple un bracelet connecté, un capteur domotique,... Le dispositif électronique 10 comprend une interface utilisateur tel qu'un écran 13, tel qu'un écran LCD ou dispositif d'affichage à cristaux liquides, et un élément d'entrée de commande 14. Cet élément d'entrée de commande est par exemple un bouton poussoir 14. Dans un autre mode de réalisation particulier, le dispositif électronique comprend une interface utilisateur tel qu'un écran tactile 13. Dans ce mode de réalisation, l'élément d'entrée de commande 14 est une zone dédiée de l'écran tactile 13.

Le dispositif électronique 10 comprend des moyens de connexion à un réseau de communication tel qu'un émetteur/récepteur radio fonctionnant conformément à la technologie Wi-Fi (*Wireless Fidelity*) telle que définie par le groupe de travail 802.11 de l'IEEE (*Institute of Electrical and Electronics Engineers*) ou encore des moyens de connexion à un autre dispositif électronique, tel qu'un téléphone mobile ou une tablette numérique, lui-même connecté à un réseau de communication. De tels moyens de connexion à un autre dispositif électronique sont par exemple un émetteur/récepteur Bluetooth®. Dans autre mode de réalisation, le dispositif électronique 10 comprend des moyens de connexion à un réseau de communication tel qu'un émetteur/récepteur radio fonctionnant conformément à la technologie 3G ou 4G.

L'élément d'entrée de commande 14 permet deux types d'interactions avec l'interface utilisateur : un appui court et un appui long qui se distinguent l'un de l'autre par la durée pendant laquelle une pression est appliquée sur l'élément d'entrée de commande 14. Dans un mode de réalisation particulier, plusieurs types d'appuis longs se distinguent en augmentant la durée de pression sur l'élément d'entrée de commande. Ces types d'interaction peuvent également se distinguer par le nombre d'appuis. En fonction de la nature de l'interaction, appui court ou long, simple ou multiple (double, triple,...), un certain type d'action est exécuté par le dispositif électronique 10 et affiché au moyen de l'interface utilisateur 13.

La **figure 1b** représente l'interface utilisateur 13 lors de la saisie d'un message textuel au moyen de l'élément d'entrée de commande 14. Un message textuel est formé d'un ou de plusieurs caractères. Un message textuel correspond par exemple à un message court de type SMS (*Short Message Service*) ou bien encore à un code d'appairage avec un autre dispositif électronique.

L'écran 13 comprend une première zone d'affichage 131 d'un caractère en cours de saisie et au moins une deuxième zone d'affichage 132, 133 d'au moins un caractère saisi.

Les caractères en cours de saisie défilent dans la zone d'affichage 131 consécutivement à une action effectuée sur le bouton poussoir 14. Les caractères qui s'affichent appartiennent à un ensemble de caractères S. Dans un mode de réalisation particulier, le défilement des caractères alphanumériques de l'ensemble est vertical, de la partie haute de l'interface utilisateur 13 vers la partie basse en commençant par la première lettre de l'ensemble de caractères. Une fois l'ensemble de caractères S affiché, l'affichage reprend au premier caractère de l'ensemble. D'autres modes de défilement des caractères alphanumériques dans la zone d'affichage 131 sont possibles, tel qu'un défilement horizontal, de droite à gauche.

Une fois un caractère saisi, c'est-à-dire validé suite à une interaction de l'utilisateur, il est supprimé de la zone d'affichage 131 pour être affiché dans la zone d'affichage 132 adjacente. Le caractère précédemment saisi est quant à lui supprimé de la zone d'affichage 132 pour être affiché dans la zone d'affichage 133 adjacente et ainsi de suite.

La **figure 2** représente des étapes d'un procédé de saisie d'un message textuel mise en œuvre par le dispositif électronique 10.

A l'initialisation, un ensemble S de caractères est formé avec l'ensemble des caractères alphabétiques {a,...z} en minuscules et en majuscules, des caractères numériques {0...9} ainsi que de caractères spéciaux, tels que des symboles mathématiques, des signes de ponctuation. Dans certains modes de réalisation particuliers, cet ensemble S de caractères comprend seulement une partie des caractères listés précédemment. L'ensemble S de caractères peut par exemple correspondre à l'ensemble des caractères alphanumériques. Cet ensemble de caractères est ainsi adapté en fonction du type de dispositif électronique.

Cet ensemble de caractères est l'ensemble de caractères dit courant.

Au cours d'une étape E1, un premier caractère de l'ensemble de caractères courant S est affiché dans la zone d'affichage 131.

Au cours d'une étape E2, l'utilisateur du dispositif électronique 10 effectue une interaction avec l'élément d'entrée de commande 14, par exemple un appui court sur le bouton poussoir 14. Le dispositif électronique 10 détecte l'interaction au moyen de l'élément d'entrée de commande 14 et détermine qu'il s'agit d'une commande de défilement effectuée au moyen de l'élément d'entrée de commande.

Dans une étape E3, suite à la détection de la commande de défilement, le dispositif électronique 10 déclenche un défilement en continu des caractères de l'ensemble de caractères courant S dans la zone d'affichage 131. Les caractères défilent selon un ordre des caractères dans cet ensemble de caractères courant. Par exemple, les caractères alphabétiques s'affichent dans l'ordre alphabétique : a puis b puis c,.... L'ensemble de caractères courant défile un par un dans la zone d'affichage 131. Une fois cet ensemble de caractères parcouru, l'affichage reprend au premier caractère de l'ensemble.

Au cours d'une étape E4, l'utilisateur du dispositif électronique 10 effectue une interaction avec l'élément d'entrée de commande 14. Le dispositif électronique 10 détecte l'interaction au moyen de l'élément d'entrée de commande 14 et détermine qu'il s'agit d'une commande d'arrêt de défilement effectuée au moyen de l'élément d'entrée de commande. Une commande d'arrêt du défilement correspond par exemple à un appui court sur le bouton poussoir 14. Le dispositif électronique 10 déclenche une interruption du défilement dans la zone d'affichage 131.

Au cours d'une étape E5, le dispositif électronique 10 détermine s'il s'agit d'une sélection du caractère courant, effectuée par l'utilisateur au moyen de l'élément d'entrée de commande. Une fois le défilement interrompu, dans un mode de réalisation particulier, le caractère sélectionné clignote dans la zone d'affichage 131. Une temporisation T est alors déclenchée. Une expiration de cette temporisation T sans détection par le dispositif électronique 10 d'une interaction avec l'utilisateur correspond à une sélection du caractère courant affiché. On peut par exemple choisir la valeur de deux secondes pour cette temporisation T.

Lorsque l'interaction de l'utilisateur correspond à une sélection, au cours d'une étape E7, le dispositif électronique 10 détermine un nouvel ensemble de caractères courant. Ce nouvel ensemble de caractères correspond à un sous-ensemble de l'ensemble de caractères courant de l'itération en cours. Ce nouvel ensemble de caractères restreint est déterminé à partir de l'ensemble de caractères courant et comprend le caractère sélectionné et une sélection de caractères encadrant le caractère sélectionné. Ce nouvel ensemble devient l'ensemble de caractères courant pour une itération suivante de l'affichage du défilement de caractères.

A titre illustratif, lorsque l'ensemble de caractères courant correspond à l'ensemble des caractères alphabétiques en minuscules {a, b, c, ...x, y, z} et le caractère affiché dans la zone d'affichage 131 est la lettre k, le nouvel ensemble courant est formé de n1 lettres dans l'ordre alphabétique précédents la lettre k, de la lettre k elle-même et de n2 lettres dans l'ordre alphabétique suivants la lettre k. Le nouvel ensemble de caractères correspond ainsi à {e, f, g, h, i, j, k, 1, m, n, o, p} pour n1=6 et n2=5. Ainsi le nouvel ensemble de caractères courant est formé à partir d'un nombre N de caractères encadrant le caractère sélectionné k. Lorsque le nombre N est impair, le caractère sélectionné k se trouve au milieu de l'ensemble de caractères courant.

A l'issue de cette étape E7, le dispositif électronique 10 met de nouveau en œuvre l'étape E2 de défilement des caractères de l'ensemble de caractères courant. Dans un mode de réalisation particulier, l'affichage dans la zone d'affichage 131 commence par exemple au caractère sélectionné lors de l'itération précédente. Dans un autre mode de réalisation particulier, l'affichage dans la zone d'affichage 131 commence par exemple au premier caractère du nouvel ensemble de caractères. Aucune limitation n'est associée à la manière de sélectionner le caractère de départ qui est affiché lors de l'étape de défilement E2.

Lorsqu'à l'étape E5, le dispositif électronique 10 détermine qu'il ne s'agit pas d'une sélection du caractère courant, il s'agit d'une validation du caractère courant de l'ensemble de caractères de cette itération. Cette validation intervient avant l'expiration de la temporisation T et est détectée en fonction d'une interaction de l'utilisateur au moyen de l'élément d'entrée de commande. Dans un mode de réalisation particulier, la détection par le dispositif électronique 10 d'un double appui sur l'élément d'entrée de commande 14 indique la validation par l'utilisateur du caractère affiché dans la zone d'affichage 131. Dans un autre mode de réalisation particulier, la détection par le dispositif électronique 10 d'un appui long sur l'élément d'entrée de commande 14 indique la validation par l'utilisateur du caractère affiché dans la zone d'affichage 131.

Lorsque l'interaction de l'utilisateur correspond à une validation, au cours d'une étape E6, le caractère en cours d'affichage dans la zone d'affichage 131 est considéré comme saisi, c'est-à-dire validé. Le dispositif électronique 10 supprime l'affichage du caractère saisi de la zone d'affichage 131 et déclenche son affichage dans la zone d'affichage 132 adjacente. Cette détection d'une validation du caractère courant au moyen de l'élément d'entrée de commande 14 met fin aux itérations.

On comprend que ces étapes sont ainsi exécutées par le dispositif électronique 10 jusqu'à la validation d'un caractère, puis de nouveau mises en œuvre pour la saisie du caractère suivant. Le mode de réalisation a été décrit avec deux itérations. Aucune limitation n'est attachée au nombre d'itérations, celui-ci dépendant de la validation d'un caractère par l'utilisateur.

Pour finir, dans une étape de fin de saisie (non représentée à la figure 2), le dispositif électronique 10 détecte une interaction au moyen de l'élément d'entrée de commande 14, par exemple un appui long, cette interaction de l'utilisateur avec l'élément d'entrée de commande 14 lui permettant d'indiquer la fin de la saisie du message textuel. La saisie du message textuel est alors terminée. Le message textuel peut par exemple être transmis à un autre dispositif électronique pour réaliser un appairage, lorsqu'il correspond à une clé d'appairage. Le message textuel peut également être transmis à un autre dispositif électronique, lorsqu'il correspond à un message court de type SMS.

Dans le mode de réalisation décrit, la vitesse de défilement v d'un ensemble de caractères ne varie pas.

Dans un autre mode de réalisation, la vitesse de défilement diminue au fur et à mesure des itérations. Au cours de l'étape E7, le dispositif électronique 10 détermine la vitesse de défilement à appliquer à l'itération suivante. La vitesse de défilement des caractères dans la première zone d'affichage lors d'une nouvelle itération est choisie pour être strictement inférieure à celle appliquée lors d'une itération précédente. A titre illustratif, lors de la première itération, la vitesse de défilement est rapide, par exemple de l'ordre de quatre caractères par seconde. Lors de la deuxième itération, la vitesse de défilement est inférieure, par exemple de l'ordre de deux caractères par seconde. Une vitesse de défilement inférieure lors d'une deuxième itération permet ainsi à l'utilisateur d'affiner la sélection du caractère saisi.

La vitesse de défilement dépend par exemple du nombre de caractères de l'ensemble de caractères. Ainsi, lors d'une itération, la durée du défilement de l'ensemble de caractères est constante, quel que soit le cardinal de cet ensemble de caractères. Le cardinal des ensembles de caractères diminuant à chaque itération, les caractères vont rester plus longtemps affichés dans la zone d'affichage 131 au fur et à mesure des itérations.

Dans un mode de réalisation particulier, une interaction de l'utilisateur au moyen de l'élément d'entrée de commande 14 détectée par le dispositif électronique 10 permet d'augmenter la vitesse de défilement des caractères dans la zone d'affichage 131 au cours de l'étape E2. Un appui long sur l'élément d'entrée de commande permet par exemple d'augmenter la vitesse de défilement des caractères dans la zone d'affichage 131.

Dans un mode de réalisation particulier, une interaction de l'utilisateur au moyen de l'élément d'entrée de commande 14 détectée par le dispositif électronique 10 permet de supprimer le dernier caractère sélectionné à l'étape E5. A titre illustratif, cette interaction correspond à un triple appui court sur l'élément d'entrée de commande. Sur détection de cette interaction par le dispositif électronique, l'itération précédente du procédé de saisie est de nouveau mise en œuvre à partir de l'ensemble de caractères courant utilisé lors de l'itération précédente. Ainsi, le caractère sélectionné est de nouveau celui de cette itération précédente. Lorsqu'il s'agit de la première itération, l'ensemble de caractères courant correspond à l'ensemble de caractères courant initial (étape E1).

Les modes de réalisation ont été décrits avec un ordre d'affichage des caractères, par exemple dans l'ordre alphabétique. Plus généralement, l'ordre d'affichage correspond à l'ordre des caractères dans l'ensemble de caractères. Aucune limitation n'est attachée à cet ordre d'affichage. Une interaction de l'utilisateur au moyen de l'élément d'entrée de commande détectée par le dispositif électronique 10 peut par exemple permettre d'inverser cet ordre d'affichage. Le dernier caractère de l'ensemble de caractères est alors affiché en premier, suivi de l'avant dernier, et ainsi de suite jusqu'au premier caractère de l'ensemble de caractères.

Les modes de réalisation ont été décrits avec certains types d'interaction de l'utilisateur au moyen de l'élément d'entrée de commande, tels que des appuis courts, des doubles appuis, des appuis longs. Aucune limitation n'est attachée à ces types d'interaction. La technique de saisie proposée est ainsi transposable à d'autres types d'interaction, d'autres agencements d'interaction, permettant de restreindre au cours d'itérations successives un ensemble de caractères à afficher en fonction de détections d'interruption de l'affichage par un utilisateur lui permettant de sélectionner ou de valider un caractère.

La **figure 3** représente le dispositif électronique 10 ainsi que les différents modules qui le composent.

Le dispositif électronique 10 comprend notamment :
- un processeur 11 pour exécuter des instructions de code de modules logiciels ;
- un module de communication 12, formant une interface de communication avec un réseau de communication sans fil, agencé pour communiquer avec un autre dispositif ;
- une zone mémoire 18, agencée pour mémoriser un programme qui comprend des instructions de code pour mettre en œuvre des étapes du procédé de saisie ;
- une mémoire de stockage 19, agencée pour stocker des données utilisées lors de la mise en œuvre du procédé de saisie ;
- une interface utilisateur comprenant un écran 13 et un élément d'entrée de commande 14 ;
- un module de détection 15, agencé pour détecter une interaction de l'utilisateur avec l'élément d'entrée de commande 14 ;
- un module de commande d'affichage 16, agencé pour commander un affichage sur l'écran 13 ;
- un module de détermination 17, agencé pour déterminer un nouvel ensemble de caractères restreint à partir de l'ensemble de caractères courant, le nouvel ensemble comprenant le caractère sélectionné et une sélection de caractères encadrant le caractère sélectionné et devenant l'ensemble de caractères courant pour une itération suivante de l'affichage du défilement de caractères.

Le module de détection 15 est en particulier agencé pour détecter une commande de défilement effectuée au moyen de l'élément d'entrée de commande, pour détecter une sélection du caractère courant au moyen de l'élément d'entrée de commande et pour détecter une validation du caractère courant au moyen de l'élément d'entrée de commande mettant fin aux itérations. Dans un mode de réalisation particulier, le module de détection 15 est agencé pour mesurer une durée d'interaction d'un utilisateur avec l'élément d'entrée de commande 14, permettant ainsi de différencier des interactions courtes d'interactions longues.

Le module de commande d'affichage 16 est notamment agencé pour commander l'affichage d'un caractère courant dans la première zone d'affichage 131 par défilement d'un ensemble de caractères courant, ledit affichage étant déclenché par la détection de la commande de défilement.

Dans un mode de réalisation particulier, l'élément d'entrée de commande 14 est un bouton poussoir. Dans un autre mode de réalisation particulier, l'affichage 13 est un écran tactile. Dans ce mode de réalisation, l'élément d'entrée de commande 14 est une zone dédiée de l'écran tactile 13.

Dans un mode de réalisation particulier, le module de commande d'affichage 16 est notamment agencé pour commander l'affichage du caractère validé dans une deuxième zone d'affichage 132 et une suppression du caractère validé de la première zone d'affichage 131, sur détection par le module de détection 15 d'une validation du caractère courant au moyen de l'élément d'entrée de commande.

Dans un mode de réalisation particulier, le module de détermination 17 est également agencé pour déterminer une vitesse de défilement à appliquer lors de l'itération suivante. Cette vitesse de défilement des caractères dans la première zone d'affichage lors d'une nouvelle itération est strictement inférieure à celle appliquée lors d'une itération précédente. Dans un mode de réalisation particulier, le module de détermination 17 est agencé pour la déterminer de manière à conserver la durée du défilement d'un ensemble de caractères constante.

Dans un mode de réalisation particulier, la commande déclenchant le défilement de caractères dans la première zone d'affichage est détectée par le module de détection 15 suite à un appui court sur l'élément d'entrée de commande 14.

Dans un mode de réalisation particulier, le module de détection 15 est agencé pour détecter un appui long sur l'élément d'entrée de commande 14 lors d'un défilement et pour augmenter la vitesse de défilement des caractères dans la première zone d'affichage suite à cette détection.

Il est ici souligné que le dispositif électronique 10 comprend également d'autres modules de traitement, non représentés sur la figure 3, agencés pour mettre en œuvre les différentes fonctions de ce dispositif.

La technique de saisie d'au moins un caractère est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en œuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, les modules 15, 16, 17 sont agencés pour mettre en œuvre des étapes du procédé de saisie d'au moins un caractère précédemment décrit, mises en œuvre par le dispositif électronique. Il s'agit de préférence de modules logiciels comprenant des instructions logicielles pour faire exécuter celles des étapes (ou des actions) du procédé de saisie précédemment décrit, mises en œuvre par un dispositif électronique. L'invention concerne donc aussi :
- un programme pour un dispositif électronique, comprenant des instructions de code de programme destinées à commander l'exécution de celles des étapes (ou des actions) du procédé de saisie précédemment décrit, lorsque ledit programme est exécuté par ce dispositif ;
- un support d'enregistrement lisible par un dispositif sur lequel est enregistré le programme pour un dispositif.

Le support d'informations peut être n'importe quelle entité ou dispositif capable de stocker le programme. Par exemple, le support peut comporter un moyen de stockage, tel qu'une ROM (pour *"Read Only Memory"*), par exemple un CD ROM ou une ROM de circuit microélectronique, ou encore un moyen d'enregistrement magnétique, par exemple un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Chacun des programmes d'ordinateur décrits ci-dessus peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

## Revendications

1. Procédé de saisie d'au moins un caractère au moyen d'une interface utilisateur d'un dispositif électronique (10), l'interface utilisateur comprenant un élément d'entrée de commande (14) et un écran d'affichage (13) avec au moins une première zone d'affichage (131) d'un caractère en cours de saisie, le procédé comprenant :
- une détection (E2) d'une commande de défilement effectuée au moyen de l'élément d'entrée de commande,
- un affichage (E3) d'un caractère courant d'un ensemble de caractères courant dans la première zone d'affichage (131) par défilement en continu, un par un, des caractères dudit ensemble, ledit affichage étant déclenché par la détection de la commande de défilement,
- une détection (E5) d'une sélection du caractère courant au moyen de l'élément d'entrée de commande,
- une détermination (E7) d'un nouvel ensemble restreint de caractères à partir de l'ensemble de caractères courant, le nouvel ensemble restreint comprenant le caractère sélectionné et une sélection de caractères encadrant le caractère sélectionné dans l'ensemble de caractères courant, le nouvel ensemble restreint devenant l'ensemble de caractères courant pour une itération suivante de l'affichage du défilement de caractères,
- une détection (E6) d'une validation du caractère courant au moyen de l'élément d'entrée de commande mettant fin aux itérations.

2. Procédé de saisie selon la revendication 1, comprenant un affichage du caractère validé dans une deuxième zone d'affichage (132) et une suppression du caractère validé de la première zone d'affichage.

3. Procédé de saisie selon la revendication 1, dans lequel la vitesse de défilement des caractères dans la première zone d'affichage lors d'une nouvelle itération est strictement inférieure à celle d'une itération précédente.

4. Procédé de saisie selon la revendication 3, dans lequel lors d'une itération, la durée du défilement de l'ensemble de caractères est constante.

5. Procédé de saisie selon la revendication 1, dans lequel la commande de défilement est détectée suite à un appui court sur l'élément d'entrée de commande.

6. Procédé de saisie selon la revendication 1 dans lequel, sur détection d'un appui long sur l'élément d'entrée de commande, la vitesse de défilement des caractères dans la première zone d'affichage est augmentée.

7. Dispositif électronique (10), permettant une saisie d'au moins un caractère au moyen d'une interface utilisateur comprenant :
- ladite interface utilisateur comprenant un élément d'entrée de commande (14) et un écran d'affichage (13) avec au moins une première zone d'affichage (131) d'un caractère en cours de saisie ;
- un module de détection (15), agencé pour détecter une commande de défilement effectuée au moyen de l'élément d'entrée de commande, pour détecter une sélection du caractère courant au moyen de l'élément d'entrée de commande et pour détecter une validation du caractère courant au moyen de l'élément d'entrée de commande mettant fin aux itérations ;
- un module de commande d'affichage (16), agencé pour commander un affichage d'un caractère courant d'un ensemble de caractères courant dans la première zone d'affichage (131) par défilement en continu, un par un, des caractères dudit ensemble, ledit affichage étant déclenché par la détection de la commande de défilement ;
- un module de détermination (17), agencé pour déterminer un nouvel ensemble restreint de caractères à partir de l'ensemble de caractères courant, le nouvel ensemble restreint comprenant le caractère sélectionné et une sélection de caractères encadrant le caractère sélectionné dans ledit ensemble courant, le nouvel ensemble restreint devenant l'ensemble de caractères courant pour une itération suivante de l'affichage du défilement de caractères.

8. Programme pour un dispositif électronique, comprenant des instructions de code de programme destinées à commander l'exécution des étapes du procédé de saisie d'au moins un caractère selon l'une des revendications 1 à 6 mises en œuvre par le dispositif électronique, lorsque ledit programme est exécuté par ledit dispositif.

9. Support d'enregistrement lisible par un dispositif électronique sur lequel est enregistré le programme selon la revendication 8.

## Patentansprüche

1. Verfahren zur Erfassung mindestens eines Zeichens mittels einer Benutzerschnittstelle einer elektronischen Vorrichtung (10), wobei die Benutzerschnittstelle ein Befehlseingabeelement (14) und einen Anzeigebildschirm (13) mit mindestens einem ersten Bereich zur Anzeige (131) eines Zeichens, das erfasst wird, umfasst, das Verfahren umfassend:
- ein Detektieren (E2) eines Durchlaufbefehls, der mittels des Befehlseingabeelements erteilt wird,
- ein Anzeigen (E3) eines aktuellen Zeichens einer aktuellen Zeichenmenge im ersten Anzeigebereich (131) durch kontinuierliches Durchlaufen der Zeichen der Menge eins nach dem anderen, wobei das Anzeigen durch die Detektion des Durchlaufbefehls ausgelöst wird,
- ein Detektieren (E5) einer Auswahl des aktuellen Zeichens mittels des Befehlseingabeelements,
- ein Bestimmen (E7) einer neuen, eingeschränkten Zeichenmenge ausgehend von der aktuellen Zeichenmenge, wobei die neue, eingeschränkte Menge das ausgewählte Zeichen umfasst und eine Zeichenauswahl das ausgewählte Zeichen in der aktuellen Zeichenmenge umrandet, wobei die neue, eingeschränkte Menge für eine folgende Iteration der Anzeige des Zeichendurchlaufs die aktuelle Zeichenmenge wird,
- ein Detektieren (E6) einer Bestätigung des aktuellen Zeichens mittels des Befehlseingabeelements, die die Iterationen beendet.

2. Erfassungsverfahren nach Anspruch 1, umfassend ein Anzeigen des bestätigten Zeichens in einem zweiten Anzeigebereich (132) und ein Löschen des bestätigten Zeichens aus dem ersten Anzeigebereich.

3. Erfassungsverfahren nach Anspruch 1, wobei die Durchlaufgeschwindigkeit der Zeichen im ersten Anzeigebereich bei einer neuen Iteration streng kleiner als die einer vorigen Iteration ist.

4. Erfassungsverfahren nach Anspruch 3, wobei bei einer Iteration die Dauer des Durchlaufs der Zeichenmenge konstant ist.

5. Erfassungsverfahren nach Anspruch 1, wobei der Durchlaufbefehl nach einem kurzen Drücken auf das Befehlseingabeelement detektiert wird.

6. Erfassungsverfahren nach Anspruch 1, wobei bei Detektion eines langen Drückens auf das Befehlseingabeelement die Durchlaufgeschwindigkeit der Zeichen im ersten Anzeigebereich erhöht wird.

7. Elektronische Vorrichtung (10), die eine Erfassung mittels eines Zeichens mittels einer Benutzerschnittstelle gestattet, umfassend:
- die Benutzerschnittstelle, die ein Befehlseingabeelement (14) und einen Anzeigebildschirm (13) mit mindestens einem ersten Bereich (131) zur Anzeige eines Zeichens, das erfasst wird, umfasst;
- ein Detektionsmodul (15), das angeordnet ist, einen Durchlaufbefehl zu detektieren, der mittels des Befehlseingabeelements erteilt wird, um eine Auswahl des aktuellen Zeichens mittels des Befehlseingabeelements zu detektieren und eine Bestätigung des aktuellen Zeichens mittels des Befehlseingabeelements, die die Iterationen beendet, zu detektieren;
- ein Anzeigesteuerungsmodul (16), das angeordnet ist, eine Anzeige eines aktuellen Zeichens einer aktuellen Zeichenmenge im ersten Anzeigebereich (131) durch kontinuierliches Durchlaufen der Zeichen der Menge eins nach dem anderen zu steuern, wobei die Anzeige durch die Detektion des Durchlaufbefehls ausgelöst wird;
- ein Bestimmungsmodul (17), das angeordnet ist, eine neue, eingeschränkte Zeichenmenge ausgehend von der aktuellen Zeichenmenge zu bestimmen, wobei die neue, eingeschränkte Menge das ausgewählte Zeichen umfasst und eine Zeichenauswahl das ausgewählte Zeichen in der aktuellen Menge umrandet, wobei die neue, eingeschränkte Menge für eine folgende Iteration der Anzeige des Zeichendurchlaufs die aktuelle Zeichenmenge wird.

8. Programm für eine elektronische Vorrichtung, das Programmcode-Anweisungen umfasst, die dazu bestimmt sind, die Ausführung der Schritte des Verfahren zur Erfassung mindestens eines Zeichens nach einem der Ansprüche 1 bis 6 zu steuern, die von der elektronischen Vorrichtung durchgeführt werden, wenn das Programm von der Vorrichtung ausgeführt wird.

9. Speichermedium, das von einer elektronischen Vorrichtung gelesen werden kann, auf dem das Programm nach Anspruch 8 gespeichert ist.

## Claims

1. Method for inputting at least one character by way of a user interface of an electronic device (10), the user interface comprising a command input element (14) and a display screen (13) with at least a first display area (131) for displaying a character currently being input, the method comprising:
- detecting (E2) a scrolling command performed by way of the command input element,
- displaying (E3) a current character of a current set of characters in the first display area (131) by scrolling continuously, one by one, through the characters of said set, said display being triggered by the detection of the scrolling command,
- detecting (E5) a selection of the current character by way of the command input element,
- determining (E7) a new restricted set of characters on the basis of the current set of characters, the new restricted set comprising the selected character and a selection of characters surrounding the selected character in the current set of characters, the new restricted set becoming the current set of characters for a following iteration of the display of the scrolling of characters,
- detecting (E6) a confirmation of the current character by way of the command input element, putting an end to the iterations.

2. Input method according to Claim 1, comprising displaying the confirmed character in a second display area (132) and deleting the confirmed character from the first display area.

3. Input method according to Claim 1, wherein the scrolling speed of the characters in the first display area during a new iteration is strictly slower than that of a previous iteration.

4. Input method according to Claim 3, wherein, during an iteration, the duration of the scrolling of the set of characters is constant.

5. Input method according to Claim 1, wherein the scrolling command is detected following a short press on the command input element.

6. Input method according to Claim 1, wherein, upon detection of a long press on the command input element, the scrolling speed of the characters in the first display area is increased.

7. Electronic device (10) allowing at least one character to be input by way of a user interface, comprising:
- said user interface comprising a command input element (14) and a display screen (13) with at least a first display area (131) for displaying a character currently being input;
- a detection module (15), designed to detect a scrolling command performed by way of the command input element, to detect a selection of the current character by way of the command input element and to detect a confirmation of the current character by way of the command input element, putting an end to the iterations;
- a display command module (16), designed to command displaying of a current character of a current set of characters in the first display area (131) by scrolling continuously, one by one, through the characters of said set, said display being triggered by the detection of the scrolling command;
- a determination module (17), designed to determine a new restricted set of characters on the basis of the current set of characters, the new restricted set comprising the selected character and a selection of characters surrounding the selected character in said current set, the new restricted set becoming the current set of characters for a following iteration of the display of the scrolling of characters.

8. Program for an electronic device, comprising program code instructions intended to command the execution of the steps of the method for inputting at least one character according to one of Claims 1 to 6 that are implemented by the electronic device when said program is executed by said device.

9. Recording medium able to be read by an electronic device and on which the program according to Claim 8 is recorded.
